# EUROPEAN PATENT SPECIFICATION

(11) **EP 0 418 961 B1**
(45) Date of publication and mention of the grant of the patent: **11.08.1993**
(21) Application number: 90202443.9
(22) Date of filing: 14.09.1990
(51) Int. Cl.: F16L 21/04

(54) **Pipe coupling**
Rohrverbindung
Raccord pour tuyau

(30) Priority: 14.09.1989 NL 8902306
(43) Date of publication of application: 27.03.1991
(73) Proprietor: GEORG FISCHER N.V., NL-8160 AA Epe (NL)
(72) Inventor: Heister, Aloisius Henricus Maria, NL-7514 BN Enschede (NL); Nijsen, Andreas Jacobus Louis, NL-7595 AT Weerselo (NL)
(74) Representative: Boelsma, Gerben Harm, Ir.

(56) References cited:
- FR-A- 1 011 833
- FR-A- 2 072 296
- GB-A- 1 550 624
- US-A- 3 183 010

## Description

The invention relates to a pipe coupling, comprising a sleeve portion having at least one end adapted for the insertion of a pipe, said end being provided with a substantially conically shaped supporting surface engaging a sealing ring of a substantially circular cross-sectional shape and with a pressure ring, by means of which - in cooperation with the supporting surface - the sealing ring may be compressed around a pipe inserted into the sleeve portion, said sealing ring being composed of a circumferentially compressible but in cross-section rather undeformable annular core, formed of a helical spring having susbtantially circular windings, said core being completely enclosed by a sheath which forms the sealing ring proper.

Such a pipe coupling is known form FR-A-2.072.296 (vide particularly fig. 3b). The construction of the sealing ring having a sealing sheath which completely encloses the helical core annulus both in circumferential and cross sectional direction is shown therein among other constructions and more particularly in addition to a construction with which the sealing sheath does not completely enclose the core annulus, so that a circular slit is formed on one axial end of the ring. It is not indicated in this reference of which material the sheath of the sealing ring is made.

It has now been found, that just the construction with which the core annulus is completely enclosed by the sealing sheath completely also in the cross sectional plane, is particularly suitable for use in conjunction with a sleeve portion, which is designed to accommodate and interconnect pipes of various diameters, and which is more particularly suitable for bridging the differences in outer diameter occuring with pipes of the same nominal diameter(= inner diameter), but formed of different material. It was considered that with a sealing ring having such a sealing sheath - in contrast to an embodiment having a slit on one axial end of the ring - it is easier to tangentially compress the ring in a uniform manner.

Based on this insight the present invention aims at providing an improved sleeve portion so as to take maximum advantage of the wide limits of use of the selected sealing ring, while keeping the cross sectional diameter of said sealing ring relatively small (which means a relatively thin sealing ring).

According to the present invention this aim is achieved in that the supporting surface has a progressively decreasing diameter as seen in the pressing direction so as to form a concave-conical profile, whereas said sheath is formed of an elastomeric material.

When pressing a sealing ring against the supporting surface of such a sleeve portion, the supporting surface will initially exert a relatively reduced force onto the sealing ring in a direction parallel to the axis of the pipe to be coupled, whereas a rather large reaction force is exerted towards the axis of the pipe. As a result of this the sealing ring may be rather easily compressed to a smaller diameter. For the sealing ring according to the invention which - in the average - has to contract to a rather large extent this is not only a practical advantage, but also provides for the condition for building a uniform and therefore reliable sealing pressure around the pipe to be sealed.

Furthermore, with a given pressing force exerted by the pressing ring, this sealing pressure is reaching its maximum with the maximum pipe diameter from which the coupling and the sealing ring are designed. This is to be seen as an advantage as the tendency of the tube to slide through the sealing ring under the influence of the pressure within the coupling is at the maximum with the maximum pipe diameter. Consequently the invention also improves the tensile strength of the coupling.

It is to be noted that FR-A-1.011.833 discloses a coupling comprising a supporting surface having a progressively decreasing diameter as seen in the direction of pressure thus forming a concave-conical profile. The supporting surface is cooperating with a rubber sealing ring shaped into conformity with the profile of the supporting surface and adapted to completely fill up the cavity confined by the supporting surface, the pipe surface and a pressure ring.

In a preferred embodiment of the invention the sheath is provided - at its axial end faced to the pressing ring - with a conically shaped bearing surface, which is complementary to the conically shaped pressing surface of the pressing ring. This prevents the sealing ring from "rolling" about its circular axis.

Further features of the invention will be hereinafter explained by way of example with reference to the drawing.
Fig. 1 shows a longitudinal crosssectional view of a straight pipe coupling according to the invention, which is designed to connect two pipe sections of different diameters, the conical supporting surface in the right half of the coupling being shaped in accordance with the invention;
fig. 2 is a cross sectional view of a detail of the conical supporting surface of the invention and the pressing surface of the pressing ring cooperating therewith;
fig. 3 is a fragmentary, cross sectional view in which the sealing ring is shown in a contracted state around a pipe of the maximum diameter, and
fig. 4 is a detailed view similar to that of fig. 3, showing the same sealing ring, but now compressed around a pipe, the diameter of which corresponds to the minimum diameter.

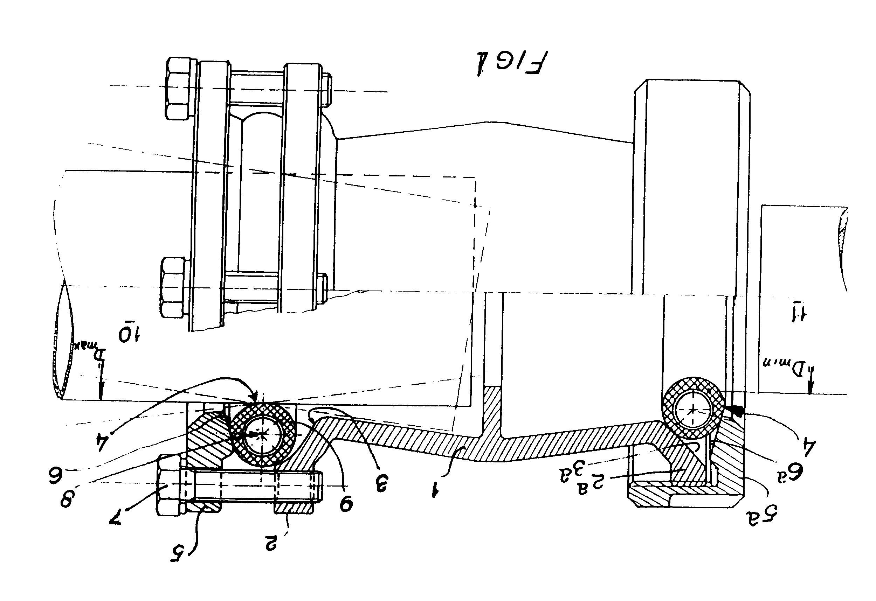

In fig. 1 1 designates a straight pipe coupling or connecting sleeve of a type well-known per se, by means of which pipes can be coupled, the diameter of which may vary between a value Dmax and a value Dmin. Flanges 2 and 2a respectively are provided at either end of the sleeve 1, said flanges having a conically shaped supporting surface 3 and 3a for the sealing ring 4 and 4a respectively surrounding the tube 10 and 11 respectively. 5 designates a pressing ring provided with a rather steep conical pressing surface 6, by means of which the sealing ring 4, positioned on the right side, may be pressed against the conical supporting surface 3 by tightning the fastening bolts 7. At the left end of the connecting sleeve 1 a nut-shaped pressing ring 5a is used.

The sealing ring 4 and 4a respectively has a core 8 and a sheath 9 of an elastomeric material, e.g. a suitable rubber, which completely encloses said core and forms the proper sealing ring. The core 8 is formed by a helical spring which has been bent to an annulus. One may start from a straight helical spring of a length which corresponds with the desired diameter in untensioned state, the free ends of which are interconnected in a suitable manner.

The sheath 9 has a relatively small thickness, which, dependent of the diameter of the sealing ring, amounts 5 - 20% of the (average) diameter of the cross section of the sealing ring.

For the manufacture of the sealing ring one may start e.g. from a straight piece of a hose of uncured or not completely cured rubber. In a piece of hose cut from a continuous hose to the desired length, the helical screw, adapted to function as a core, is inserted first, after which the assembly is bent to a closed annulus, the free ends of the spring are interconnected and the hose ends are slided over one another over a certain distance. The sealing ring is then ready for (complete) curing in a suitable mould according to the usual techniques. During curing the thickening, formed by the superimposed free hose ends, are caused to flow out, so that finally a sealing ring is obtaining having a uniform cross sectional shape over its entire circumference. During curing the sheath 9 of the sealing ring 4 is also provided, on one axial end which is adapted to face, in use, towards the pressing ring 5, with a conical surface which is complementary to the conically shaped pressing surface 6.

As a result of the properties of the helical spring-core 8 and also in connection with the rather slight thickness of the sheath 9, a so formed sealing ring may, in principle, be compressed rather easily to a smaller diameter. Due to the rather easy compressibility in circumferential direction one sealing ring may, in principle, be used for sealing the entire diameter range Dmin - Dmax of the coupling. The right half of fig. 1 is illustrative of the case in which the diameter of the pipe 10 to be connected has the maximum value for which the coupling is designed. In this case the sealing ring 4 needs to be circumferentially compressed to a small extent only. In the left half of fig. 1, however, the case is illustrated in which the pipe 11 to be coupled has a diameter corresponding to the minimum diameter for which the coupling is designed. In this case the sealing ring has to be circumferentially compressed to such an extent that the spaces between the successive windings of the core annulus 9 are substantially closed. As shown in the drawing, the sealing ring 4, (4a) may be circumferentially compressed even beyond Dmin, without resulting in a substantial change in cross sectional shape of the sealing ring.

While in the left half of fig. 1 both the pressing surface 6a and the supporting surface 3a have - as according to the prior art - a straight cross sectional form, the right half of fig. 1 represents the specific form of the conical supporting surface 3 in accordance of the present invention. As shown (vide also fig. 2) this supporting surface is slightly concave in shape as seen towards the axis of the coupling. For the diameter of it is progressively - rather than proportionately- decreasing as seen in the pressing direction of the pressing ring.

Fig. 2 illustrates that the taper α of the supporting surface 3 increases from e.g. 20° at the outer circumference to e.g. 75° at the inner circumference, while the pressing surface 6 of the pressing ring 5 has a constant taper φ of e.g. 60°. In fig. 2 it is also shown that the pressing surface 6 is formed on an axially projecting "nose portion" 5a of the pressing ring 5, due to which the pressing ring with its pressing surface 6 may be moved into the space surrounded by the concave-conical supporting surface 3.

The position of the pressing ring 5 indicated with full lines in the drawing corresponds with the initial position of the ring, when the undeformed sealing ring, having a cross sectional diameter d9, is just touching the supporting surface 3 and the pressing surface 6. At 5' the innermost position of the pressing ring is indicated, which position is determined by the circumferentially compressed core-crossectional circle d8 just contacting the supporting surface 3, as well as the pressing surface 6 and the smallest pipe diameter Dmin.

The effect of this concave-conical shape of the supporting surface 3 is, that when pressing the sealing ring the latter will be initially subjected to a relatively large force component directed to the axis and as a consequence of this may be easily compressed in the circumferential direction. This provides for conditions for a better balance between the sealing pressures acting on the conical surface 3 on one hand and on the pipe 10 and 11 respectively on the other hand.

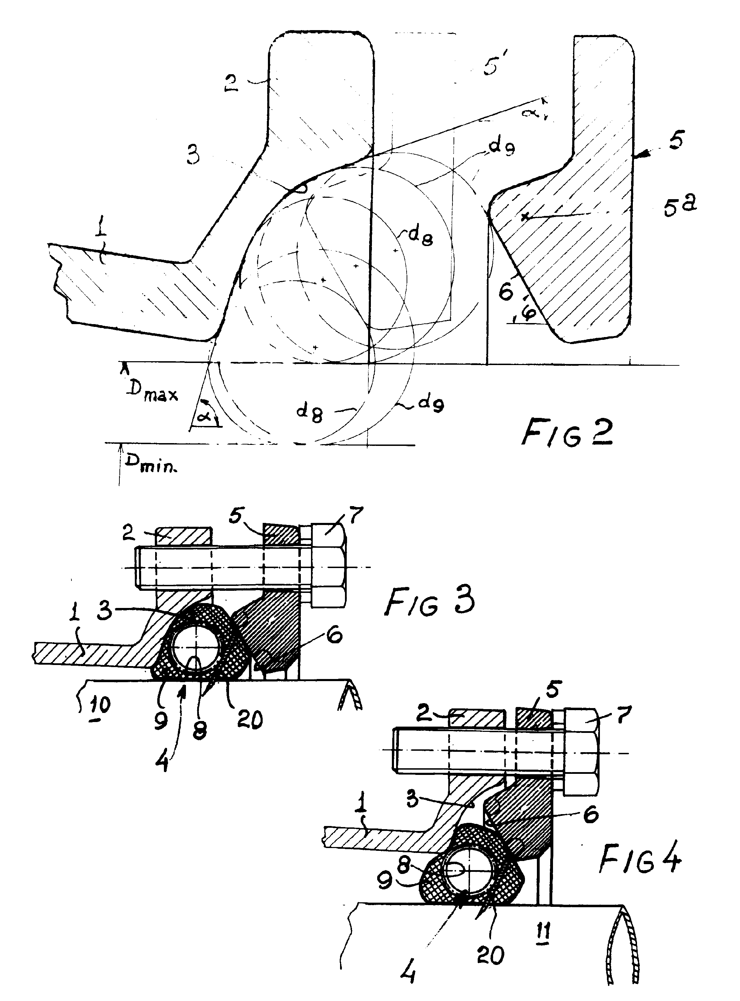

In fig. 3 it has been shown how the sealing ring 4, starting from the initial stage in fig. 1 (to the right) will finally become clamped around a pipe 10 of the maximum diameter (Dmax) by means of the pressing ring 5. Typically the helical spring/core annulus 8 has maintained its original cross sectional shape, whereas the sheath 9 has "conformed" to a large extent to the surfaces 3, 6 and the pipe surface.

In fig. 4 it is shown how the same sealing ring will finally get clamped onto a tube 11 of the minimum diameter Dmin. Again the helical spring/core annulus 8 has substantially kept its original circular cross sectional shape, whereas the sheath 9 has "conformed" to a still larger extent to the surfaces 3, 6, the pipe surface and to the surface of the sleeve section 1 adjoining the supporting surface 3.

Fig. 3 and 4 also show the sealing ring according to the invention in an embodiment, in which the ring is provided with a number of circumferentially spaced, hook-like elements 20 of e.g. metal in the sheath 9, said elements being caused to bite into the surface of the pipe 10, 11 to be coupled when the sealing ring 2 is circumferentially compressed, so as to increase the tensile strength of the coupling still further.

These hook-like elements do not interfere with the circumferential compressibility of the sealing ring. They may be applied also on the side of the sealing ring which is turned away from the pressing ring, when a pressure resistant connection between sleeve portion and pipe is desired as well.

In the example shown in the drawing, the elements 20 are bearing with their outer ends against the conically shaped pressing surface 6 of the pressing ring 5. This embodiment has the advantage, that the elements are pressed, when compressing the sealing ring 4, by the pressing ring 5 into the material of the tube to be connected in a direct manner.

Hereinabove as well as in the attached claims, the term "sleeve portion" has to be widely interpreted and is meant to cover also curved sleeves, T-joints and connecting sockets of fittings and accessories.

## Claims

1. A pipe coupling, comprising a sleeve portion (1) having at least one end adapted for the insertion of a pipe (10), said end being provided with a substantially conically shaped supporting surface (3) engaging a sealing ring (4) of a substantially circular cross-sectional shape and with a pressure ring (5), by means of which - in cooperation with the supporting surface (3) - the sealing ring (4) may be compressed around a pipe inserted into the sleeve portion (1), said sealing ring (4) being composed of a circumferentially compressible but in cross-section rather undeformable annular core (8), formed of a helical spring having substantially circular windings, said core (8) being completely enclosed by a sheath (9) which forms the sealing ring proper, **characterized** in that the supporting surface (3) has a progressively decreasing diameter as seen in the pressing direction so as to form a concave-conical profile, whereas said sheath (9) is formed of an elastomeric material.

2. A pipe coupling to claim 1, characterized in that the taper of the concave-conical supporting surface (3) is increasing from e.g. 20° on the outer side to e.g. 75° on the inner side, whereas the pressing surface (6) of the pressing ring (5) has a constant taper of about 60°.

## Patentansprüche

1. Eine Rohrkupplung, mit einem Muffenteil (1) von denen mindestens ein Ende zum Einstecken eines Rohres (10) geeignet ist, welches Ende mit einer etwa konisch gestalteten Stützfläche (3) versehen ist, auf welcher ein Dichtungsring (4) mit einer etwa kreisrunden Querschnittsform anliegt, und einen Pressring (5) aufweist, mit Hilfe dessen - in Kombination mit der Stützfläche (3) - der Dichtungsring (4) um ein in den Muffenteil (1) gestecktes Rohr zusammengepresst werden kann, welcher Dichtungsring (4) aus einem in der Umfangsrichtung zusammenpressbaren, sondern in Querschnitt nahezu unverformbaren, aus einer Schraubenfeder mit nahezu kreisrunden Windungen geformten Ringkern (8) besteht, welcher Kern (8) vollständig durch eine den eigentlichen Dichtungsring bildende Scheide (9) umschlossen wird, dadurch gekennzeichnet, dass die Stützfläche (3), in der Anpressrichtung gesehen, einen progressiv abnehmenden Durchmesser aufweist, unter Bildung eines konkav-konischen Profils, während die Scheibe (9) aus einem Elastomerwerkstoff besteht.

2. Eine Rohrkupplung gemäss Anspruch 1, dadurch gekennzeichnet, dass der Neigungswinkel der konkav-konischen Stützfläche (3) von z.B. 20° an der Aussenseite bis z.B. 75° an der Innenseite zunimmt, während die Pressfläche (6) des Pressringes (5) einen gleichbleibenden Neigungswinkel von etwa 60° aufweist.

## Revendications

1. Un raccord pour tuyau, comprenant une partie formant manchon (1) ayant au moins une extrémité adaptée pour l'insertion d'un tuyau (10), ladite extrémité étant pourvue d'une surface de support conformée de façon sensiblement conique (3) s'engageant avec un anneau d'étanchéité (4) d'une forme en coupe transversale sensiblement circulaire et d'un anneau de pression (5), au moyen duquel- en coopération avec la surface de support (3) - l'anneau d'étanchéité (4) peut être comprimé autour d'un tuyau inséré dans la partie formant manchon (1), ledit anneau d'étanchéité (4) étant composé d'un noyau annulaire (8) circonférentiellement compressible mais en coupe transversale plutôt indéformable, formé d'un ressort hélicoïdal ayant des enroulements sensiblement circulaires, ledit noyau (8) étant complètement entouré par une gaine (9) qui forme le véritable anneau d'étanchéité, caractérisé en ce que la surface de support (3) a un diamètre progressivement dégressif lorsque vu dans la direction de compression de façon à former un profilé concave-conique, tandis que ladite gaine (9) est formée d'un matériau élastomère.

2. Raccord pour tuyau selon la revendication 1, caractérisé en ce que le cône de la surface de support concave-conique (3) est augmenté à partir de par exemple 20° sur le côté extérieur vers par exemple 75° sur le côté interne, tandis que la surface de compression (6) de l'anneau de pression (5) a un cône constant d'environ 60°.
